# FASCICULE DE BREVET EUROPEEN

(11) **EP 2 439 111 B1**
(45) Date de publication et mention de la délivrance du brevet: **03.04.2013**
(21) Numéro de dépôt: 11182142.7
(22) Date de dépôt: 21.09.2011
(51) Int. Cl.: B60R 21/00, B60T 7/06, B60T 11/16

(54) **Maître-cylindre à embout de protection**
Hauptzylinder mit Schutzansatzstück
Master cylinder with protective end

(30) Priorité: 05.10.2010 FR 1003945
(43) Date de publication de la demande: 11.04.2012
(73) Titulaire: Robert Bosch GmbH, 70442 Stuttgart (DE)
(72) Inventeur: Lenczner, Sylvain, 77450 Esbly (FR); Duterne, Arnaud, 94500 Champigny (FR); Duchossoy, Christophe, 95270 Viarnes (FR); Camarillo, Alvaro, 2330 Entrocamento (PT)

(56) Documents cités:
- WO-A1-97/49589
- WO-A1-2004/089710
- DE-A1-102008 059 106
- GB-A- 2 230 493
- JP-A- 2000 264 187

## Description

La présente invention se rapporte à un maître cylindre à embout de protection. Plus particulièrement, l'invention se rapporte à un embout de maître cylindre comportant un dispositif de protection d'un conducteur lors d'un choc. L'invention est décrite pour le domaine de l'automobile mais peut très bien être appliquée à d'autres domaines.

De nos jours, les véhicules comportent de nombreux éléments dans le compartiment moteur. Ces éléments occupent une certaine place dans le véhicule. Ainsi, lorsque le véhicule subit un choc, de nombreux éléments sont compressés les uns contre les autres. En particulier, différents éléments du moteur, par exemple une batterie du véhicule, sont souvent placée en vis à vis d'un maître cylindre d'un circuit de freinage.

Lors d'un choc, frontal par exemple, les éléments du moteur en vis à vis du maître cylindre appliquent une poussée sur le maître cylindre. Cette poussée peut se répercuter dans l'ensemble du circuit de freinage. Cette répercussion fait généralement remonter une pédale de frein du circuit de freinage dans l'habitacle du véhicule. La remontée de la pédale de frein dans l'habitacle peut alors blesser le conducteur du véhicule, par exemple en lui cassant une cheville.

Afin d'éviter cette remontée dans l'habitacle du véhicule de la pédale de frein, et donc une blessure du conducteur, il est connu par exemple dans le brevet japonais JP 2000264187 de créer un dispositif s'adaptant sur l'embout du maître cylindre sur lequel a lieu la poussée lors d'un choc. Un tel dispositif a pour but de permettre l'évacuation de la pression contenue dans le circuit de freinage lors d'un choc. L'évacuation de cette pression évite le recul immédiat du dispositif de freinage durant un choc. Ce recul n'est cependant que retardé. En effet si le choc est suffisamment important, la poussée des éléments du moteur, après avoir évacué la pression du circuit de freinage, fait effet de manière mécanique simple par poussée sur le maître cylindre, faisant remonter la pédale de frein dans l'habitacle du véhicule malgré le dispositif. D'autres systèmes sont décrits dans le document WO97/49589.

Afin d'éviter la remontée dans l'habitacle de la pédale de frein, l'invention prévoit de limiter ou de détourner les efforts transmis par un élément du moteur, en vis à vis du maître cylindre, au maître cylindre lors d'un choc. Le dispositif, selon un mode de réalisation de l'invention, prévoit de perforer les différents éléments du moteur pouvant faire pression sur le maître cylindre lors d'un choc. Selon d'autres mode de réalisation de l'invention, le dispositif prévoit de dévier l'avancée des éléments du moteur pouvant appliquer une poussée sur le maître cylindre, ou de dévier la trajectoire du maître cylindre pour éviter que la pédale n'exerce de poussée sur le pied du conducteur.

Afin de dévier ou perforer les éléments du moteur en vis à vis du maître cylindre, le dispositif selon l'invention prévoit la présence d'une surface de contact, située entre les éléments du moteur en vis à vis du maître cylindre et le maître cylindre, ladite surface de contact se développant de manière non perpendiculaire à un axe de développement du maître cylindre. Ainsi une surface d'application des efforts durant un choc sur le maître cylindre, selon l'invention, peut être bombée ou inclinée par rapport à l'axe de développement du maître cylindre si le dispositif selon l'invention a pour fonction de détourner les efforts appliqués au maître cylindre durant un choc. Par ailleurs, si le dispositif selon l'invention a pour fonction de limiter l'application d'efforts sur le maître cylindre par perforation, alors l'extrémité du maître cylindre peut présenter une forme particulière afin de perforer les éléments du moteur en vis à vis du maître cylindre lors d'un choc, en pointe ou en lame par exemple.

Cependant, la réalisation d'un maître cylindre présentant une telle extrémité n'est pas simple. En effet la réalisation d'un tel maître cylindre impose des modifications importantes sur les appareils de construction des maîtres cylindres existant. De plus, de tels appareils modifiés ainsi que les maîtres cylindres correspondants sont complexes à réaliser de par la forme particulière du maître cylindre selon l'invention.

Par ailleurs la réalisation de tels maîtres cylindres impose une fabrication spécifique de maître cylindre pour chaque application prévue. Ainsi un maître cylindre différent doit être crée pour chaque type de moteur présentant des éléments différents en vis à vis du maître cylindre. Des maîtres cylindres différents peuvent même être réalisés pour des véhicules de même type en fonction des options choisies sur le véhicule, ces options modifiant alors la configuration interne du moteur pour des véhicules d'un même modèle.

Afin d'éviter les difficultés de modification des appareillages et de permettre la possibilité de moduler le dispositif selon l'invention en fonction des différents véhicules, l'invention prévoit l'adjonction d'une pièce rapportée à une extrémité du maître cylindre en vis a vis d'éléments externes au circuit de freinage, typiquement les éléments du moteur en vis à vis du maître cylindre. Une telle pièce rapportée présente selon l'invention une surface de contact en vis à vis de ces éléments externes se développant de manière non perpendiculaire à la génératrice du maître cylindre.

L'invention a donc pour objet un maître cylindre comportant une première extrémité située en vis à vis d'un élément d'un moteur, appelé élément extérieur, et une deuxième extrémité intégrée à un circuit de freinage, caractérisé en ce qu'une pièce rapportée est montée sur la première extrémité du maître cylindre, la pièce rapportée présente à une extrémité de la pièce rapportée opposée au maître cylindre une surface de contact en vis à vis de l'élément extérieur non perpendiculaire à un axe de développement du maître cylindre.

Un mode préférentiel de réalisation de l'invention prévoit que la surface de contact de la pièce rapportée se développe dans un plan incliné par rapport à l'axe de développement du maître cylindre.

Un mode de réalisation préférentiel de l'invention prévoit que la surface de contact est une surface arrondie.

Un mode de réalisation préférentiel de l'invention prévoit que la surface de contact de la pièce rapportée comporte un dispositif de perforation situé en vis à vis de l'élément extérieur.

Un mode de réalisation préférentiel de l'invention prévoit que le maître cylindre comporte un dispositif d'indexation de la pièce rapporté définissant différentes orientations possibles de la surface de contact par rapport au maître cylindre.

Un mode de réalisation préférentiel de l'invention prévoit que le maître cylindre comporte une interface de liaison permettant de fixer la pièce rapportée sur le maître cylindre.

Un mode de réalisation préférentiel de l'invention prévoit que l'interface de liaison comporte un arbre coopérant avec un trou de guidage réalisé dans la pièce rapportée, l'arbre et le trou de guidage comportant des méplats coopérant afin de définir l'orientation de la pièce rapportée par rapport au maître cylindre.

Un mode de réalisation préférentiel de l'invention prévoit que l'interface de liaison comporte un trou de fixation coopérant avec un trou de fixation présent sur la pièce rapportée, une goupille insérée à la fois dans le trou de fixation de l'interface de liaison et dans le trou de fixation de la pièce rapportée bloquant en déplacement la pièce rapportée par rapport au maître cylindre.

Un mode de réalisation préférentiel de l'invention prévoit que la pièce rapportée est fixée par sertissage sur l'interface de liaison.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue schématique d'un maître cylindre traditionnel intégré à un circuit de freinage.
- Figure 2: Une vue en perspective schématique d'un maître cylindre selon un premier mode de réalisation de l'invention.
- Figure 3 : Une vue en perspective schématique d'un maître cylindre selon un deuxième mode de réalisation de l'invention.
- Figures 4A, 4B, 4C, 4D, 4E, 4F et 4G : des vues schématiques de variantes de moyens de fixation d'un pièce rapportée sur un maître cylindre selon l'invention.

Les références ci-après seront utilisées dans les descriptions des figures :
1 - Maître cylindre
2 - Éléments du moteur en vis à vis de 1
3 - Première extrémité de 1
4 - Deuxième extrémité de 1
5 - Surface plane
6 - Axe de développement de 1
7 - Pièce rapportée
8 - Interface de liaison
9 - extrémité de 7
10 - Surface de contact
11 - Extrémité de 7 dans le deuxième mode de réalisation de l'invention
12 - Dispositif de perforation
13 - Cône pointu
14 - Extrémité de 12
15 - Arbre de 8
16 - Gorge
17 - Trou de guidage
18 - Couronne
19 - Méplat sur 15
20 - Méplats sur 17 et 18
21 - Trou de passage dans 18
23 - Ressort
24 - Pattes de 23
25 - Espace interne de 18
26 - Chanfrein de 15
27 - Diamètre de l'arbre 31
28 - Méplat sur 27
29 - Trou de guidage
30 - Diamètre de 29
31 - Arbre
32 - Arbre
33 - Trou de guidage
34 - Trou de fixation sur 32
35 - Trou de fixation sur 7
36 - Goupille
37 - Joint
38 - Rainures parallèles
39 - Trou de fixation
40 - Rainures de guidage
41 - Trou de fixation sur 7
42 - Arbre
43 - Méplat sur 42
44 - Trou de fixation sur 42
45 - Dégagement
46 - Méplat sur 7
47 - Logement de vis
48 - Arbre
49 - Trou de fixation sur 48
50 - Méplat sur 48
51 - Trou de guidage
52 - Trou de fixation sur 7

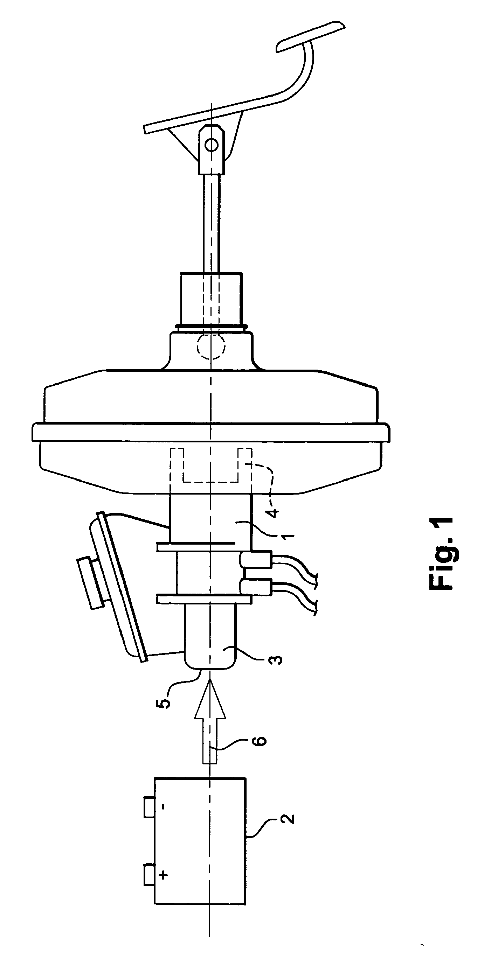

La figure 1 représente une vue schématique d'un maître cylindre 1 traditionnel intégré à un circuit de freinage. Un tel maître cylindre est intégré dans un circuit de freinage allant d'une pédale de frein, activée par un conducteur pour freiner un véhicule, jusqu'à un dispositif de freinage d'une roue tel que par exemple des plaquettes de freins appliquées sur un disque de frein.

Le circuit de freinage est au moins partiellement intégré dans un compartiment moteur du véhicule. Ainsi, le maître cylindre 1 est entouré de différents éléments 2 du moteur, tels que par exemple une batterie, ou des systèmes tels qu'un dispositif d'anti blocage de sécurité ABS. Une première extrémité 3 du maître cylindre 1 est en vis à vis direct de ces éléments 2 du moteur. Une deuxième extrémité 4 du maître cylindre 1 est intégrée dans le circuit de freinage, cette deuxième extrémité 4 est par exemple solidarisée à un servofrein.

La première extrémité 3 du maître cylindre 1 présente une surface plane 5. Lors d'un choc du véhicule, les éléments du moteur 2 en vis à vis de cette surface plane 5 sont directement appliqués contre cette surface plane 5. Lorsque la poussée des éléments du moteur s'effectue suivant un axe de développement 6 du maître cylindre 1, la poussée peut se répercuter dans l'ensemble du circuit de freinage. Cette poussée peut alors entraîner une remontée de la pédale de frein dans l'habitacle du véhicule. Cette remontée de la pédale de frein dans l'habitacle du véhicule peut alors engendrer une blessure du conducteur.

Afin d'éviter cette remontée de la pédale de frein dans l'habitacle du véhicule, l'invention prévoit dans un premier mode de réalisation de dévier angulairement la poussée appliquée par les éléments 2 du moteur sur le maître cylindre 1. Cette déviation selon l'invention est telle que les efforts appliqués par les éléments 2 du moteur ne sont pas transmis au maître cylindre 1 suivant l'axe de développement 6 du maître cylindre 1. Dans ce cas, le maître cylindre pivote de manière à éviter de faire reculer la pédale de frein.

Dans un deuxième mode de réalisation, l'invention prévoit de limiter la poussée des éléments 2 du moteur sur le maître cylindre 1. Pour cela le deuxième mode de réalisation de l'invention prévoit une perforation des éléments 2 du moteur pouvant effectuer une poussée sur le maître cylindre 1 lors d'un choc. Une telle perforation limite alors la poussée des éléments 2 du moteur sur le maître cylindre 1 et donc sur le circuit de freinage et sur la pédale de frein.

Dans le premier mode de réalisation comme dans le deuxième mode de réalisation selon l'invention, la déviation ou la limitation des efforts appliqués sur le maître cylindre 1 est effectuée à l'aide d'une pièce rapportée 7. La pièce rapportée 7 est montée sur la première extrémité 3 du maître cylindre 1. Pour permettre le montage de la pièce rapportée 7 sur le maître cylindre 1, la première extrémité 3 comporte une interface de liaison 8. La pièce rapportée 7 est montée sur cette interface de liaison 8. La pièce rapportée 7 peut être réalisée en métal ou dans une autre matière.

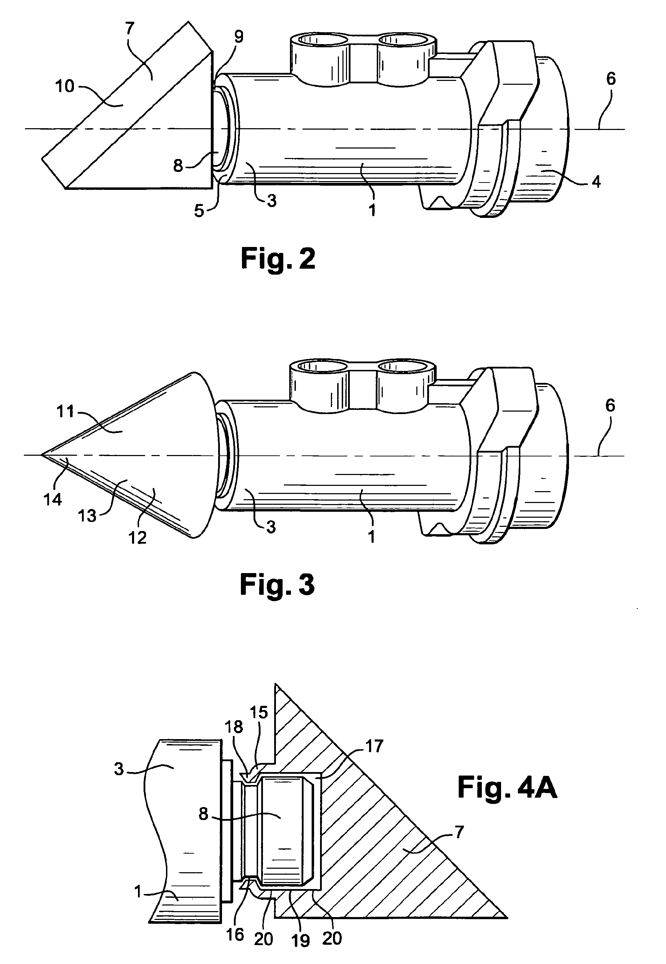

La figure 2 représente une vue en perspective schématique d'un maître cylindre selon un premier mode de réalisation de l'invention.

Dans ce mode de réalisation d'un maître cylindre selon l'invention, la pièce rapportée 7 comporte une surface de contact 10 inclinée. Cette surface de contact 10 est située à une extrémité 9 de la pièce rapportée 7 opposée au maître cylindre 1. Par « surface inclinée », on entend que cette surface de contact 10 se développe de manière non perpendiculaire à l'axe de développement 6 du maître cylindre 1. La surface de contact 10 peut par exemple être arrondie, ou encore plane. L'inclinaison de la surface de contact 10 par rapport à l'axe de développement 6 du maître cylindre 1 permet de dévier la poussée des éléments 2 du moteur lors d'un choc, en faisant basculer le maître cylindre 1. Cette déviation évite la répercussion du choc dans tout le circuit de freinage jusqu'à la pédale de frein. Avantageusement, la surface de contact 10 présente une inclinaison par rapport à l'axe 6 comprise entre 20° et 70°, préférentiellement entre 40° et 50°.

La figure 3 représente une vue en perspective schématique d'un maître cylindre selon le deuxième mode de réalisation de l'invention.

Dans ce deuxième mode de réalisation de l'invention, la pièce rapportée 7 comporte un dispositif de perforation 12. Ce dispositif de perforation 12 est situé sur une extrémité 11 de la pièce rapportée 7 opposée à la surface plane 5, c'est à dire en vis à vis des éléments 2 du moteur. Un tel dispositif de perforation 12 peut par exemple se présenter sous la forme d'un cône pointu 13. Lors d'un choc, une extrémité 14 du cône 13 pénètre dans les éléments 2 du moteur appliquant une poussée sur le maître cylindre en les perforant. Cette pénétration limite le recul du maître cylindre, ainsi que la transmission des efforts des éléments 2 du moteur au maître cylindre 1 et donc au circuit de freinage.

Une variante de ce deuxième mode de réalisation prévoit la présence de lames coupantes. Ces lames coupantes peuvent compléter ou remplacer un cône 13. De telles lames coupantes pénètrent alors dans les éléments 2 du moteur de la même manière que le cône pointu 13. De telles lames peuvent aussi servir à sectionner des câbles qui seraient situés en vis à vis du maître cylindre.

Avantageusement, l'invention prévoit un dispositif de fixation de la pièce rapportée 7 sur le maître cylindre comportant un dispositif d'indexation angulaire. Un tel dispositif d'indexation permet de modifier l'orientation de la surface de contact 10 de la pièce rapportée 7. La modification de l'orientation de la surface de contact 10 permet d'adapter le maître cylindre 1 selon l'invention aux différents types de moteurs ainsi qu'aux différentes configurations possibles des éléments 2 d'un moteur. Par exemple, un même maître cylindre 1 selon l'invention peut être installé dans des moteurs ayant une batterie en vis à vis du maître cylindre 1 situées dans des positions relatives au maître cylindre 1 différentes, ou encore selon que le véhicule comporte ou non certaines options pouvant être situées en vis à vis du maître cylindre 1 dans le moteur, un dispositif de type ABS par exemple. Cette indexation est particulièrement avantageuse dans le premier mode de réalisation de l'invention c'est à dire dans un dispositif de déviation. En effet il permet de changer l'orientation de la déviation en fonction des positions dans le compartiment moteur des éléments 2 ou de l'inclinaison de l'axe 6.

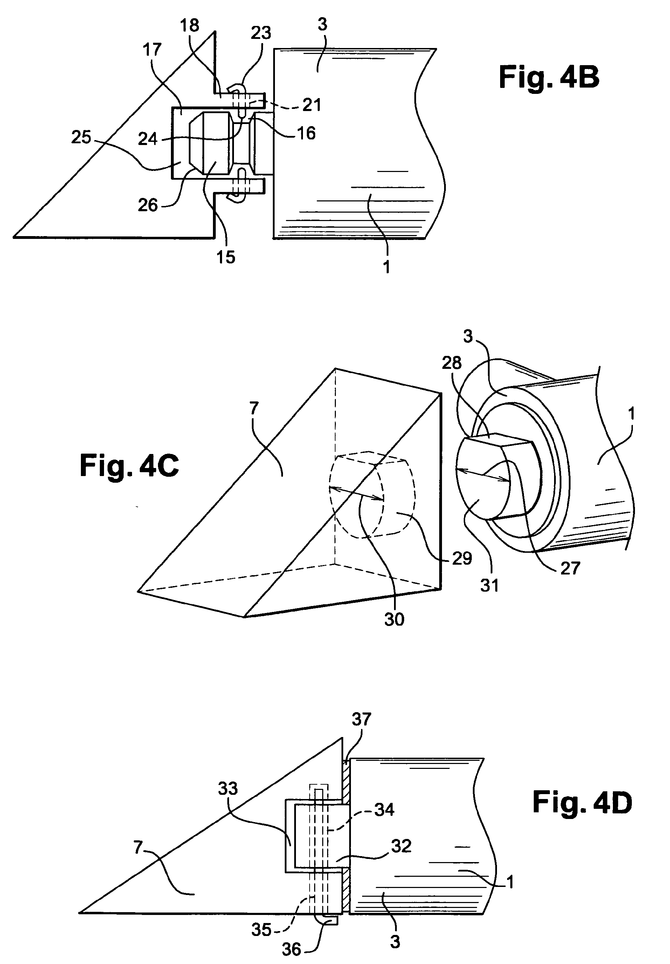

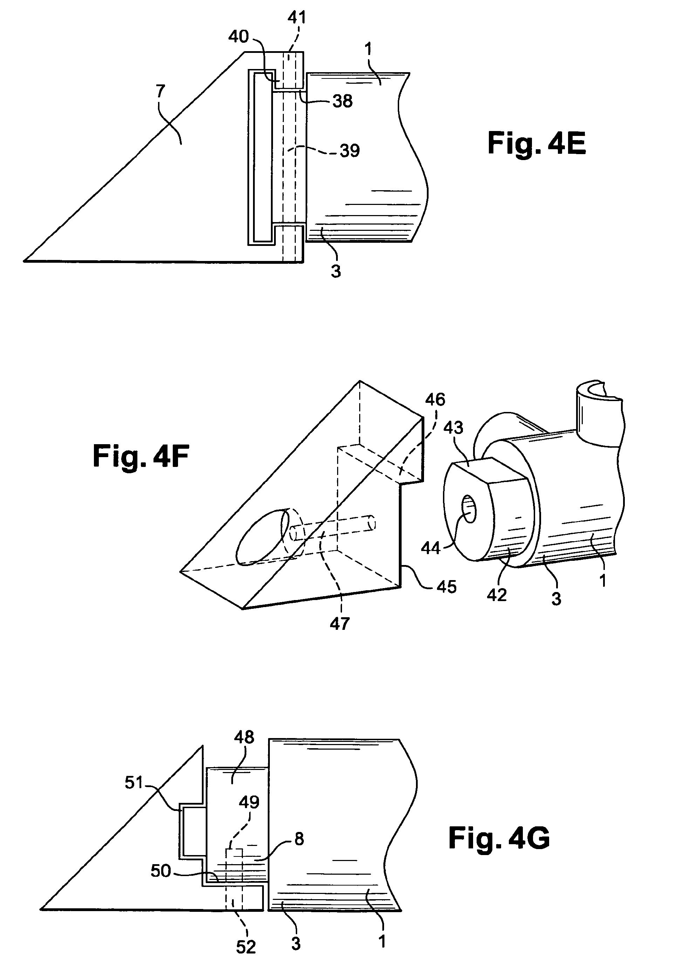

Les figures 4A, 4B, 4C, 4D, 4E, 4F et 4G représentent des vues en perspective schématique de variantes de modes de fixations de la pièce rapportée sur le maître cylindre selon l'invention.

Dans les modes de fixation représentés sur la figure 4A et 4B, l'interface de liaison 8 est réalisée à l'aide d'un arbre 15. L'arbre 15 comporte une gorge circulaire 16. La pièce rapportée 7 comporte un trou de guidage 17 complémentaire de l'arbre 15. Par ailleurs la pièce rapportée 7 comporte une couronne 18 située dans la continuité du trou de guidage 17. Lors du montage, l'arbre 15 est inséré en premier lieu dans la couronne 18 puis dans le trou de guidage 17.

L'indexation, ou l'orientation, de la pièce rapportée 7, et donc de la surface de contact 10 dans la première variante de fixation, est définie au moment du montage. Un ou plusieurs méplats 19 peuvent être réalisés sur l'arbre 15. Des méplats 20 complémentaires du méplat 19 sont alors réalisés sur la couronne 18 et dans le trou 17 de guidage afin de conserver la complémentarité de la pièce rapportée 7 et de l'arbre 15. Ces méplats 19 et 20 permettent de définir une orientation précise de la pièce rapportée 7 par rapport au maître cylindre.

Dans la première variante de fixation représentée sur la figure 4A, la pièce rapportée 7 est fixée sur l'arbre 15 par sertissage. Plus particulièrement, cette fixation est assurée par sertissage de la couronne 18 dans la gorge circulaire 16.

Dans la variante de fixation représentée sur la figure 4B, la couronne 18 comporte des trous de passage 21 traversant de part en part une paroi de ladite couronne 18. Un ressort 23 entoure la couronne 18. Des pattes 24 du ressort 23 sont insérées dans les trous de passage 21 et ressortent dans un espace interne 25 de la couronne 18. Par ailleurs l'arbre 15 comporte un chanfrein 26 situé à une extrémité de l'arbre opposée au maître cylindre.

Lors du montage de la pièce rapportée 7 sur l'arbre 15, les pattes 24 du ressort 23 sont écartées par le chanfrein lors de l'insertion de l'arbre 15 dans l'espace interne 25. Lorsque les pattes 24 ressorts sont situées en vis à vis de la gorge circulaire 16, les pattes 24 sont introduites dans la gorge circulaire 16 bloquant ainsi en translation la pièce rapportée 7 par rapport au maître cylindre 1. L'indexation peut être obtenue à l'aide de méplats ou par tout autre dispositif connu de l'homme du métier.

Dans la variante de fixation présentée sur la figure 4C, l'interface de liaison 8 est réalisée à l'aide d'un arbre 31 comportant ou non un méplat 28. La pièce rapportée 7 comporte un trou 29 de guidage ayant un diamètre 30 légèrement inférieur à un diamètre 27 de l'arbre 31. La fixation est alors réalisée par un montage en force.

Dans la variante de fixation présentée sur la figure 4D, l'interface de liaison est réalisée à l'aide d'un arbre 32. La pièce rapportée 7 comporte un trou de guidage 33. L'arbre 32 comporte un ou plusieurs trous 34 de fixation. La pièce rapportée 7 comporte un ou plusieurs trous de fixations 35 coopérant avec les trous de fixation 34 disposés en vis à vis. Les dimensions de l'arbre 32 et du trou de guidage 33 permettent une insertion de l'arbre 32 dans le trou de guidage 33 par glissement. Une mise en correspondance des trous de fixations 34 et 35 respectivement présents sur la pièce rapportée 7 et sur l'arbre 32 permet d'insérer une goupille 36, par exemple une tige métallique 36. Une telle goupille 36 bloque le mouvement de la pièce rapportée 7 par rapport à l'arbre 32 et donc au maître cylindre 1. On peut prévoir la présence d'un joint 37 entre le maître cylindre 1 et la pièce rapportée 7 afin d'empêcher les mouvements pouvant résulter d'éventuels jeux au montage et d'atténuer les bruits résultant de ces jeux.

Dans la variante de fixation présentée sur la figure 4E, le maître cylindre 1 comporte deux rainures parallèles 38. Un ou plusieurs trous 39 de fixation peuvent être prévus en plus de ces rainures 38. De tels trous de fixation 39 se développent alors de préférence suivant un axe non parallèle à l'axe de développement des rainures 38. La pièce rapportée 7 comporte des rainures de guidage 40 complémentaire des rainures 38. Ces rainures de guidage 40 peuvent être traversantes ou non. La pièce rapportée 7, comporte par ailleurs des trous de fixations 41. Ces trous de fixation 41 se développent suivant un axe parallèle à l'axe de développement des trous de fixation 39. La pièce rapportée 7 est montée par insertion des rainures de guidage 40 dans les rainures 38 du maître cylindre 1. La correspondance des trous de fixations 39 du maître cylindre et des trous de fixation 41 de la pièce rapportée 7 permet un blocage par goupille de la pièce rapportée 7. L'orientation des rainures 38 permet de définir l'orientation de la pièce rapportée 7 par rapport au maître cylindre 1.

Dans la variante de fixation présentée dans la figure 4F, l'interface de liaison 8 est réalisée par un arbre 42. Cet arbre 42 comporte un méplat 43. Par ailleurs cet arbre 42 comporte en son centre un trou de fixation 44. La pièce rapportée 7 comporte un dégagement 45 associé à un méplat 46 coopérant avec l'arbre 42 et le méplat 43. Par ailleurs la pièce rapportée 7 comporte un logement 47 de vis. La pièce rapportée 7 est montée en contact avec l'arbre 42. La fixation est assurée par vissage de la pièce rapportée 7 sur le maître cylindre 1 par une vis passant dans le logement de vis 47 et le trou de fixation 44. L'orientation de la pièce rapportée 7 par rapport au maître cylindre 1 est ici définie par l'orientation du méplat 43.

Une variante possible est réalisée par un arbre fileté coopérant avec un trou taraudé dans la pièce rapportée 7. L'orientation de la pièce rapportée est alors définie en fonction des départs des filets du filetage. Un pincement de la pièce rapportée après vissage peut rendre l'ensemble indémontable.

Dans la variante de fixation présentée dans la figure 4G, l'interface de liaison 8 est réalisée par un arbre 48. Cet arbre 48 comporte un trou de fixation 49. L'arbre 48 peut éventuellement comporter un méplat 50. La pièce rapportée 7 comporte un trou de guidage 51 pour recevoir l'arbre 48. La pièce rapportée 7 comporte également un trou de fixation 52. Les dimensions de l'arbre 48 et du trou de guidage 51 permettent un montage glissant. Un tel montage est bloqué en mouvement par une goupille ou par vissage via les trous de fixations 49 et 52.

L'invention permet donc d'empêcher en cas d'accident un transfert du choc à travers le circuit de freinage et une remontée de la pédale de frein dans l'habitacle du véhicule et ce sans nécessiter une modification importante des appareils actuels de fabrication des maîtres cylindre 1. Par ailleurs les différentes variantes de fixation associées à une indexation de la pièce rapportée 7 selon l'invention permet d'adapter l'invention à tout type de véhicule.

## Revendications

1. Maître cylindre (1) comportant une première extrémité (3) située en vis à vis d'un élément (2) d'un moteur et une deuxième extrémité (4) intégrée à un circuit de freinage,
**caractérisé en ce que** :
- une pièce rapportée (7) est montée sur la première extrémité du maître cylindre,
- la pièce rapportée présente à une extrémité (9) de la pièce rapportée (7) opposée au maître cylindre une surface de contact (10) en vis à vis de l'élément (2), ladite surface présentant une inclinaison comprise entre 20° et 70° par rapport à un axe (6) de développement du maître cylindre,
- qu'il comporte un dispositif d'indexation de la pièce rapportée (7), définissant différentes orientations possibles de la surface de contact (10) par rapport au maître cylindre.

2. Maître cylindre selon la revendication 1, **caractérisé en ce qu'**il comporte une interface de liaison (8) permettant de fixer la pièce rapportée (7) sur le maître cylindre.

3. Maître cylindre selon la revendication 2, **caractérisé en ce que** l'interface de liaison comporte un arbre (32) coopérant avec un trou de guidage (33) réalisé dans la pièce rapportée (7), l'arbre et le trou de guidage comportant des méplats coopérant afin de définir l'orientation de la pièce rapportée par rapport au maître cylindre.

4. Maître cylindre selon l'une des revendications 2 à 3, **caractérisé en ce que** l'interface de liaison comporte un trou de fixation (49) coopérant avec un trou de fixation (52) présent sur la pièce rapportée, une goupille insérée à la fois dans le trou de fixation de l'interface de liaison et dans le trou de fixation de la pièce rapportée bloquant en déplacement la pièce rapportée par rapport au maître cylindre.

5. Maître cylindre selon l'une des revendications 2 à 4, **caractérisé en ce que** la pièce rapportée est fixée par sertissage sur l'interface de liaison.

## Claims

1. Master cylinder (1) comprising a first end (3) situated facing an element (2) of an engine and a second end (4) incorporated into a braking circuit, **characterized in that**:
- an attached part (7) is mounted on the first end of the master cylinder,
- the attached part has, at one end (9) of the attached part (7) which is the opposite end to the master cylinder, a contact surface (10) facing the element (2), the said surface having an inclination of between 20° and 70° with respect to an axis (6) of development of the master cylinder,
- **in that** it comprises a device for indexing the attached part (7), defining various possible orientations of the contact surface (10) with respect to the master cylinder.

2. Master cylinder according to Claim 1, **characterized in that** it comprises a connection interface (8) that allows the attached part (7) to be fixed to the master cylinder.

3. Master cylinder according to Claim 2, **characterized in that** the connection interface comprises a shaft (32) engaging with a guide hole (33) made in the attached part (7), the shaft and the guide hole having mutually engaging flats so as to define the orientation of the attached part with respect to the master cylinder.

4. Master cylinder according to one of Claims 2 and 3, **characterized in that** the connection interface comprises a fixing hole (49) collaborating with a fixing hole (52) present on the attached part, a pin inserted both into the fixing hole in the connection interface and into the fixing hole in the attached part blocking the attached part against movement with respect to the master cylinder.

5. Master cylinder according to one of Claim 2 to 4, **characterized in that** the attached part is fixed to the connection interface by crimping.

## Patentansprüche

1. Hauptzylinder (1), der ein erstes Ende (3), das sich gegenüber einem Element (2) eines Motors befindet, und ein zweites Ende (4) aufweist, das in einen Bremskreislauf integriert ist,
**dadurch gekennzeichnet, dass**:
- ein angesetztes Bauteil (7) auf das erste Ende des Hauptzylinders montiert ist,
- das angesetzte Bauteil an einem Ende (9) des angesetzten Bauteils (7) entgegengesetzt zum Hauptzylinder eine Kontaktfläche (10) gegenüber dem Element (2) aufweist, wobei die Fläche eine Neigung zwischen 20° und 70° bezüglich einer Ausdehnungsachse (6) des Hauptzylinders aufweist,
- er eine Indexierungsvorrichtung des angesetzten Bauteils (7) aufweist, die verschiedene mögliche Ausrichtungen der Kontaktfläche (10) bezüglich des Hauptzylinders definiert.

2. Hauptzylinder nach Anspruch 1, **dadurch gekennzeichnet, dass** er eine Verbindungsschnittstelle (8) aufweist, die es ermöglicht, das angesetzte Bauteil (7) am Hauptzylinder zu befestigen.

3. Hauptzylinder nach Anspruch 2, **dadurch gekennzeichnet, dass** die Verbindungsschnittstelle eine Welle (32) aufweist, die mit einem im angesetzten Bauteil (7) hergestellten Führungsloch (33) zusammenwirkt, wobei die Welle und das Führungsloch Abflachungen aufweisen, die zusammenwirken, um die Ausrichtung des angesetzten Bauteils bezüglich des Hauptzylinders zu definieren.

4. Hauptzylinder nach einem der Ansprüche 2 bis 3, **dadurch gekennzeichnet, dass** die Verbindungsschnittstelle ein Befestigungsloch (49) aufweist, das mit einem im angesetzten Bauteil vorhandenen Befestigungsloch (52) zusammenwirkt, wobei ein Stift, der sowohl in das Befestigungsloch der Verbindungsschnittstelle als auch in das Befestigungsloch des angesetzten Bauteils eingesetzt ist, die Verschiebung des angesetzten Bauteils bezüglich des Hauptzylinders verhindert.

5. Hauptzylinder nach einem der Ansprüche 2 bis 4, **dadurch gekennzeichnet, dass** das angesetzte Bauteil durch Quetschverbindung an der Verbindungsschnittstelle befestigt wird.
